(19) Europäisches Patentamt
European Patent Office
Office européen des brevets

(11) **EP 2 677 568 A1**

(12) **EUROPEAN PATENT APPLICATION**
published in accordance with Art. 153(4) EPC

(43) Date of publication:
**25.12.2013 Bulletin 2013/52**

(51) Int Cl.:
*H01M 4/13* (2010.01)     *H01G 9/058* (0000.00)
*H01M 4/139* (2010.01)    *H01M 4/62* (2006.01)

(21) Application number: **12747694.3**

(22) Date of filing: **07.02.2012**

(86) International application number:
**PCT/JP2012/052680**

(87) International publication number:
**WO 2012/111472 (23.08.2012 Gazette 2012/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2011   JP 2011029455
11.04.2011   JP 2011087100
11.04.2011   JP 2011087101**

(71) Applicant: **JSR Corporation
Minato-ku
Tokyo 105-8640 (JP)**

(72) Inventors:
• **KAJIWARA, Ichiro
Tokyo 105-8640 (JP)**
• **KOSE, Osamu
Tokyo 105-8640 (JP)**
• **HONDA, Tatsuaki
Tokyo 105-8640 (JP)**

(74) Representative: **TBK
Bavariaring 4-6
80336 München (DE)**

(54) **ELECTRODE FOR ELECTRICITY STORAGE DEVICE, SLURRY FOR ELECTRODE, BINDER COMPOSITION FOR ELECTRODE, AND ELECTRICITY STORAGE DEVICE**

(57)     An electrical storage device electrode includes a collector, and an active material layer that is formed on a surface of the collector, the active material layer including at least a polymer and an active material, and the active material layer having a polymer distribution coefficient of 0.6 to 1.0 and a density of 1.3 to 1.8 g/cm$^3$.

FIG.1

**Description**

TECHNICAL FIELD

The present invention relates to an electrical storage device electrode, an electrode slurry for producing the electrical storage device electrode, an electrode binder composition for producing the slurry, and an electrical storage device that includes the electrical storage device electrode.

BACKGROUND ART

In recent years, a high-voltage electrical storage device having a high energy density has been desired as a power supply for driving an electronic instrument. In particular, a lithium-ion battery and a lithium-ion capacitor are expected to be a high-voltage electrical storage device having a high energy density.

An electrical storage device electrode used for such an electrical storage device is produced by applying a mixture of polymer particles and active material particles to the surface of a collector, and drying the applied mixture. The polymer particles are required to exhibit a capability to bind the active material particles and bond the active material particles to the collector (hereinafter may be referred to as "binding/bonding capability"), scratch resistance when winding the electrode, and fall-off resistance (i.e., a fine powder of the active material or the like does not fall from an electrode composition layer (hereinafter may be referred to as "active material layer") due to cutting or the like), for example. When the electrode meets these requirements, it is possible to easily design the electrode folding method, the electrode winding radius, and the like, and reduce the size of the electrical storage device.

Since the polymer particles used to produce the active material layer are normally non-conductive, the polymer particles tend to hinder the movement of electrons. Therefore, it is effective to reduce the amount of the polymer particles from the viewpoint of improving the electrical characteristics of the electrical storage device. However, the binding/ bonding capability and the fall-off resistance deteriorate, and workability significantly deteriorates as a result of reducing the amount of the polymer particles. Therefore, a reduction in the amount of the polymer particles is limited, and has a trade-off relationship with an improvement in electrical characteristics.

JP-A-2003-100298 discloses a technique that controls the particle size of the polymer particles in order to improve the binding/bonding capability, the fall-off resistance, and the electrical characteristics of the electrical storage device at the same time. JP-A-11-297313 discloses a technique that improves the binding/bonding capability by controlling the average particle size of the polymer particles used as an electrode binder and the average particle size of the active material particles. JP-A-2010-205722 and JP-A-2010-3703 disclose a technique that improves the binding/ bonding capability and the fall-off resistance by utilizing an electrode binder that includes an epoxy group or a hydroxyl group.

In recent years, use of an electrode slurry that includes an aqueous medium instead of an organic medium (hereinafter may be referred to as "aqueous slurry") has been studied taking account of environmental issues and the like. The active material layer can be formed on the surface of the collector by applying the aqueous slurry to the surface of the collector, and evaporating water from the aqueous slurry by circulating or blowing high-temperature air in a drier.

However, the polymer component included in the aqueous slurry may be localized and immobilized when water is evaporated. For example, adhesion between the collector and the active material layer may significantly decrease when the amount of the polymer component is relatively small at the interface between the collector and the active material layer.

For example, JP-A-10-270013 discloses a technique that increases the concentration of the polymer component in the active material layer in the vicinity of the collector by forming a plurality of active material layers on the collector in order to control the uneven distribution of the polymer component.

SUMMARY OF THE INVENTION

TECHNICAL PROBLEM

The above technique can improve the binding/bonding capability and the fall-off resistance by controlling the uneven distribution of the polymer component in the active material layer, but cannot ensure that the electrical storage device exhibits sufficient electrical characteristics since the concentration of the polymer component in the active material layer is high in the vicinity of the collector.

Several aspects of the invention may solve the above problems, and may provide an electrical storage device electrode that exhibits an excellent binding/bonding capability, excellent fall-off resistance, and excellent electrical characteristics, an electrode slurry for producing the electrical storage device electrode, and an electrode binder composition for producing the slurry

SOLUTION TO PROBLEM

The invention was conceived in order to solve at least some of the above problems, and may be implemented as the following aspects or application examples.

Application Example 1

According to one aspect of the invention, an electrical storage device electrode includes a collector, and an active material layer that is formed on a surface of the collector, the active material layer including at least a polymer and an active material, and the active material layer having a polymer distribution coefficient of 0.6 to 1.0 and a density of 1.3 to 1.8 g/cm$^3$.

Application Example 2

In the electrical storage device electrode according to Application Example 1, the active material may include a silicon-based active material.

Application Example 3

In the electrical storage device electrode according to Application Example 1 or 2, the active material layer may be a layer that is formed by applying an electrode slurry to the surface of the collector, and drying the applied electrode slurry, the electrode slurry including (A) polymer particles, (B) active material particles, and (C) water, a ratio (Db/Da) of an average particle size (Db) of the active material particles (B) to an average particle size (Da) of the polymer particles (A) being 20 to 100, and the electrode slurry having a thread-forming capability of 30 to 80%.

Application Example 4

In the electrical storage device electrode according to Application Example 3, the polymer particles (A) may have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

Application Example 5

In the electrical storage device electrode according to Application Example 3 or 4, the average particle size (Db) of the active material particles (B) may be 1 to 200 micrometers.

Application Example 6

According to another aspect of the invention, an electrode slurry for producing the electrical storage device electrode according to Application Example 1 or 2 includes (A) polymer particles, (B) active material particles, and (C) water, the ratio (Db/Da) of the average particle size (Db) of the active material particles (B) to the average particle size (Da) of the polymer particles (A) being 20 to 100, and the electrode slurry having a thread-forming capability of 30 to 80%.

Application Example 7

In the electrode slurry according to Application Example 6, the polymer particles (A) may have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

Application Example 8

In the electrode slurry according to Application Example 6 or 7, the average particle size (Db) of the active material particles (B) may be 1 to 200 micrometers.

Application Example 9

According to another aspect of the invention, an electrode binder composition for producing the electrode slurry according to Application Example 6 includes (A) polymer particles and a liquid medium, the polymer particles (A) having a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

Application Example 10

In the electrode binder composition according to Application Example 9, the liquid medium may have a normal boiling point of 80 to 350°C.

Application Example 11

According to another aspect of the invention, an electrical storage device includes the electrical storage device electrode according to any one of Application Examples 1 to 5.

ADVANTAGEOUS EFFECTS OF THE INVENTION

The electrical storage device electrode according to one aspect of the invention exhibits excellent fall-off resistance and excellent electrical characteristics while ensuring that the collector and the active material layer exhibit excellent adhesion to each other. The electrical storage device that includes the electrical storage device electrode exhibits excellent charge-discharge rate characteristics (i.e., electrical characteristics).

BRIEF DESCRIPTION OF DRAWINGS

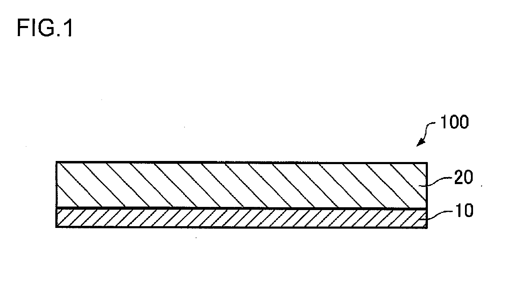

FIG. 1 is a cross-sectional view schematically illustrating an electrical storage device electrode according to one embodiment of the invention.

DESCRIPTION OF EMBODIMENTS

Exemplary embodiments of the invention are described in detail below. Note that the invention is not limited to the following exemplary embodiments. The invention also includes various modifications that may be made without departing from the scope of the invention.

1. Electrical storage device electrode

FIG. 1 is a cross-sectional view schematically illustrating an electric storage device electrode according to one embodiment of the invention. As illustrated in FIG. 1, an electrical storage device electrode 100 includes a collector 10, and an active material layer 20 that is formed on the surface of the collector 10.

The shape of the collector 10 is not particularly limited. The collector 10 is normally in the shape of a sheet having a thickness of about 0.001 to about 0.5 mm. The collector 10 is not particularly limited as long as the collector 10 is formed of a conductive material. When the electrical storage device is a lithium-ion secondary battery, the collector 10 may be formed of a metal foil (e.g., iron, copper, aluminum, nickel, or stainless steel). It is preferable to use aluminum for forming the cathode, and use copper for forming the anode. When the electrical storage device is a nickel-hydrogen secondary battery, the collector 10 may be formed of a perforated metal, an expanded metal, wire gauze, a foam metal, sintered metal fibers, a metal-plated resin sheet, or the like.

The active material layer 20 is a layer that is formed by applying an electrode slurry (described later) to the surface of the collector 10, and drying the applied electrode slurry. The electrode slurry includes (A) polymer particles and (B) active material particles. Therefore, the active material layer 20 includes at least a polymer and an active material. The thickness of the active material layer 20 is not particularly limited, but is normally 0.005 to 5 mm, and preferably 0.01 to 2 mm.

The electrode slurry may be applied to the surface of the collector 10 by an arbitrary method. For example, the electrode slurry may be applied to the surface of the collector 10 by a doctor blade method, a dipping method, a reverse roll method, a direct roll method, a gravure method, an extrusion method, an immersion method, a brush coating method, or the like. The amount of the electrode slurry applied to the surface of the collector 10 may be appropriately adjusted so that the resulting active material layer has a thickness within the above range.

The applied electrode slurry may be dried by an arbitrary method. For example, the applied electrode slurry may be dried by application of hot air, hot blast, or low-humidity air, vacuum drying, or application of (far-)infrared rays, electron beams, or the like. The drying speed is normally adjusted to remove the liquid medium as quickly as possible within such a range that cracks do not occur in the active material layer due to stress concentration, and the active material layer is not removed from the collector.

The density of the electrical storage device electrode may be increased by pressing the dried collector. The collector may be pressed using a die press, a roll press, or the like.

The electrical storage device electrode 100 according to one embodiment of the invention is characterized in that the active material layer 20 has a polymer distribution coefficient of 0.6 to 1.0 (preferably 0.7 to 0.95, and more preferably 0.75 to 0.9).

The term "polymer distribution coefficient" used herein refers to a coefficient defmed using the following measurement method.

(1) The active material layer 20 is formed on one side of the collector 10 using the above method. The resulting electrical storage device electrode is divided into two parts to obtain two electrical storage device electrodes 100 that include the active material layer 20.

(2) A double-sided tape ("NW-25" manufactured by Nichiban Co., Ltd.) is attached to an aluminum plate provided in advance, and a Kapton tape ("650S" manufactured by Teraoka Corporation) is attached to the double-sided tape so that the adhesive face is positioned on the upper side.

(3) The active material layer 20 of one of the electrical storage device electrodes 100 obtained in (1) is placed on the adhesive face of the Kapton tape provided in (2), and compression-bonded using a roller.

(4) The aluminum plate prepared as described above is secured on a horizontal surface so that the collector 10 faces upward, and the collector 10 is pulled upward at a constant speed so that the collector 10 forms an angle of 90° with the aluminum plate to remove the collector 10 from the active material layer 20.

(5) The active material layer 20 that remains on the collector 10 and the active material layer 20 that remains on the Kapton tape are scraped off up to a depth of 1.5 micrometers from the surface of the active material layer 20 to obtain a measurement sample A. Note that the entire active material layer 20 is scraped off when the thickness of the remaining active material layer 20 is 1.5 micrometers or less.

(6) The entire active material layer 20 is scraped off from the other of the electrical storage device electrodes 100 obtained in (1) to obtain a measurement sample B.

(7) The measurement sample A and the measurement sample B are analyzed by pyrolysis gas chromatography using a high-frequency induction heating-type pyrolyzer to calculate the content (mass%) (per unit weight) of the polymer component in each sample. The resulting values are substituted into the following expression (1) to calculate the polymer distribution coefficient.

$$\text{Polymer distribution coefficient} = \text{(polymer content (mass\%) in measurement sample A)} / \text{(polymer content (mass\%) in measurement sample B)} \qquad (1)$$

It is considered that the polymer component is uniformly distributed in the active material layer 20 when the polymer distribution coefficient is 1. It is considered that the polymer component is unevenly (locally) distributed near the interface between the collector 10 and the active material layer 20 when the polymer distribution coefficient exceeds 1, and the polymer component is thinly distributed near the interface between the collector 10 and the active material layer 20 when the polymer distribution coefficient is less than 1.

Therefore, since the polymer component is sufficiently present near the interface between the collector and the active material layer when the polymer distribution coefficient of the active material layer is 0.6 to 1.0, adhesion between the collector and the active material layer is improved, and an electrical storage device electrode that exhibits excellent fall-off resistance and electrical characteristics is obtained. If the polymer distribution coefficient of the active material layer is less than the above range, adhesion between the collector and the active material layer may decrease since the amount of the polymer component that functions as a binder is small at the interface between the collector and the active material layer. Moreover, the smoothness of the surface of the active material layer may deteriorate due to bleeding. If the polymer distribution coefficient of the active material layer exceeds the above range, an increase in internal resistance of the electrode and a deterioration in electrical characteristics may occur since the binder component (insulator) is locally distributed at the interface between the collector and the active material layer.

The electrical storage device electrode 100 according to one embodiment of the invention is characterized in that the active material layer 20 has a density of 1.3 to 1.8 $g/cm^3$ (preferably 1.4 to 1.7 $g/cm^3$, and more preferably 1.5 to 1.6 $g/cm^3$). When the density of the active material layer is within the above range, adhesion between the collector and the active material layer is improved, and an electrode that exhibits excellent fall-off resistance and electrical characteristics is obtained. If the density of the active material layer is less than the above range, the active material layer may aggregate or may be removed (i.e., fall-off resistance may deteriorate), since the polymer component included in the active material layer may not sufficiently function as a binder. If the density of the active material layer exceeds the above range, the polymer component included in the active material layer may function as a binder to an excessive extent, and the electrode active material may be bonded (bound) too strongly, and not follow the flexible collector. As a result, the collector and the active material layer may be separated from each other at the interface between the collector and the active material layer.

The term "density" used herein in connection with the active material layer refers to a value measured using the following measurement method.

Specifically, an active material layer having an area C (cm$^2$) and a thickness D (micrometers) is formed on one side of a collector using the above method to obtain an electrical storage device electrode. When the mass of the collector is A (g), and the mass of the electrical storage device electrode is B (g), the density of the active material layer is calculated by the following expression (2).

$$\text{Density (g/cm}^3\text{) of active material layer} =$$

$$(B\,(g) - A\,(g)) / (C\,(cm^2) \times D\,(micrometers) \times 10^{-4}) \qquad (2)$$

2. Electrode slurry

An electrode slurry according to one embodiment of the invention is used to produce the electrical storage device electrode. More specifically, the electrode slurry according to one embodiment of the invention is a dispersion that is applied to the surface of the collector, and dried to form the active material layer.

The electrode slurry according to one embodiment of the invention includes (A) polymer particles (hereinafter may be referred to as "component (A)"), (B) active material particles (hereinafter may be referred to as "component (B)"), and (C) water (hereinafter may be referred to as "component (C)"), the ratio (Db/Da) of the average particle size (Db) of the active material particles (B) to the average particle size (Da) of the polymer particles (A) being 20 to 100, and the electrode slurry having a thread-forming capability of 30 to 80%. The features of the electrode slurry according to one embodiment of the invention are described in detail below.

2.1. Features of electrode slurry

The electrode slurry according to one embodiment of the invention is characterized in that the ratio (Db/Da) of the average particle size (Db) of the active material particles (B) to the average particle size (Da) of the polymer particles (A) is 20 to 100 (preferably 25 to 95, and more preferably 30 to 90).

When the electrode slurry includes water as the dispersion medium (C), the component (A) and/or the component (B) moves along the thickness direction of the film (hereinafter may be referred to as "migration") due to surface tension when applying the electrode slurry to the surface of the collector, and drying the applied electrode slurry. More specifically, the component (A) and/or the component (B) tend to move toward the side of the film that does not come in contact with the collector (i.e., a gas-solid interface at which water evaporates).

As a result, the distribution of the component (A) and the component (B) becomes non-uniform in the thickness direction of the film, whereby a deterioration in electrode characteristics, a decrease in adhesion between the collector and the active material layer, and the like may occur. For example, when the component (A) that functions as a binder bleeds (moves) toward the gas-solid interface of the active material layer, and the amount of the component (A) at the interface between the collector and the active material layer relatively decreases, penetration of an electrolyte solution into the active material layer may be hindered, and the electrical characteristics may deteriorate. Moreover, adhesion between the collector and the active material layer may decrease, and separation may occur. The smoothness of the surface of the active material layer may also deteriorate when the component (A) bleeds.

When the ratio (Db/Da) is within the above range, occurrence of the above problems can be suppressed, and an electrode that exhibits excellent electrical characteristics and excellent adhesion can be obtained. If the ratio (Db/Da) is less than the above range, the contact area between the component (A) and the component (B) may decrease, and fall-off resistance may deteriorate since the difference in average particle size between the component (A) and the component (B) is small. If the ratio (Db/Da) exceeds the above range, adhesion of the component (A) may become insufficient, and adhesion between the collector and the active material layer may decrease since the difference in average particle size between the component (A) and the component (B) is large.

The electrode slurry according to one embodiment of the invention preferably has a thread-forming capability of 30 to 80%, preferably 33 to 79%, and more preferably 35 to 78%. If the thread-forming capability is less than the above range, the leveling properties of the electrode slurry may be insufficient when applying the electrode slurry to the collector, and it may be difficult to produce an electrode having a uniform thickness. If an electrode having a non-uniform thickness is used to produce a battery, the charge-discharge reaction may undergo an in-plane distribution, and it may be difficult to achieve stable battery characteristics. If the thread-forming capability exceeds the above range, dripping may easily occur when applying the electrode slurry to the collector, and it may be difficult to obtain an electrode having stable quality. When the thread-forming capability is within the above range, occurrence of the above problems can be suppressed, and an electrode that exhibits excellent electrical characteristics and an excellent binding/bonding capability can be obtained.

The term "thread-forming capability" used herein refers to a value measured as described below.

Specifically, a Zahn cup ("Zahn Viscosity Cup No. 5" manufactured by Taiyu Kizai Co., Ltd.) having an orifice (diameter: 5.2 mm) at the bottom thereof is provided. 40 g of the electrode slurry is poured into the Zahn cup in a state in which the orifice is closed. The orifice is then opened, and the electrode slurry is allowed to flow out through the orifice. The thread-forming capability is calculated by the following expression (3) where $T_0$ is the time when the orifice has been opened, $T_A$ is the time when the electrode slurry no longer flows out through the orifice as if to form a thread, and $T_B$ is the time when the electrode slurry no longer flows out through the orifice.

$$\text{Thread-forming capability (\%)} = ((T_A - T_0) / (T_B - T_0)) \times 100 \qquad (3)$$

Each component included in the electrode slurry according to one embodiment of the invention is described in detail below.

2.2. Polymer particles (A)

The polymer particles (A) included in the electrode slurry according to one embodiment of the invention are a component that functions as a binder for bonding the active material particles (B) to the collector.

The polymer particles (A) preferably have an average particle size (Da) of 0.05 to 0.4 micrometers, more preferably 0.06 to 0.39 micrometers, and particularly preferably 0.07 to 0.38 micrometers. When the average particle size (Da) of the polymer particles (A) is within the above range, the polymer particles (A) are adsorbed on the surface of the active material particles (B) in a well-balance manner, and occurrence of migration can be suppressed.

The polymer particles (A) preferably satisfy the following requirements [1] and [2].

[1] Polymer particles having a particle size of 0.01 or more and less than 0.25 micrometers account for 2 to 60 vol% (preferably 3 to 55 vol%, and more preferably 4 to 50 vol%).
[2] Polymer particles having a particle size of 0.25 to 0.5 micrometers account for 40 to 98 vol% (preferably 45 to 97 vol%, and more preferably 50 to 96 vol%).

When the polymer particles (A) satisfy the requirements [1] and [2] (i.e., the polymer particle content is within the above ranges), it is possible to effectively suppress a situation in which the polymer particles are unevenly (locally) distributed at the interface between the active material layer and air, and promote penetration of an electrolyte solution into the active material layer. This makes it possible to improve the electrical characteristics (e.g., charge-discharge characteristics), and improve adhesion between the collector and the active material layer to suppress separation, for example. Moreover, fall-off resistance tends to be improved when the polymer particles (A) satisfy the requirements [1] and [2] (i.e., the polymer particle content is within the above ranges).

The average particle size (Da) and the particle size distribution of the polymer particles (A) are determined using a particle size distribution analyzer that utilizes the light scattering method as the measurement principle. Examples of the particle size distribution analyzer include Coulter LS230, Coulter LS100, Coulter LS13 320 (all manufactured by Coulter), FPAR-1000 (Otsuka Electronics Co., Ltd.), and the like. The particle size distribution analyzer can measure not only the particle size distribution of the primary particles of the polymer particles, but also the particle size distribution of the secondary particles that are formed through aggregation of the primary particles. Therefore, the particle size distribution measured by the particle size distribution analyzer can be used as an index of the dispersion state of the polymer particles (A) included in the electrode slurry

Note that the average particle size (Da) and the particle size distribution of the polymer particles (A) may also be determined by centrifuging the electrode slurry to precipitate the active material particles (B), and analyzing the supernatant liquid by the above method.

A polymer for forming the polymer particles (A) is not particularly limited as long as the polymer functions as a binder for bonding the active material particles (B) to the collector. Examples of the polymer for forming the polymer particles (A) include a (meth)acrylate (co)polymer, a styrene-(meth)acrylate copolymer, a styrene-butadiene copolymer, an acrylonitrile-butadiene copolymer, polybutadiene, and the like.

It is preferable that the polymer be a rubbery polymer that preferably has a glass transition temperature (Tg) of -75 to +30°C, and particularly preferably -70 to +10°C. If a polymer that has too low a Tg is used, a decrease in battery capacity may occur. If a polymer that has too high a Tg is used, the binding/bonding capability may deteriorate, or a temperature-dependent change in battery characteristics may increase.

The polymer particles (A) may be produced by an arbitrary method. For example, the polymer particles (A) may be produced by emulsion polymerization, seed emulsion polymerization, suspension polymerization, seed suspension polymerization, solution precipitation polymerization, or the like. It is also possible to use a dissolution dispersion method that dissolves or swells polymer particles in a solvent, stirs the mixture in a medium that is immiscible with the solvent, and then removes the solvent. The resulting polymer particles may be chemically modified, or may be physically modified by applying electron beams, for example.

The polymer particles (A) may be synthesized in one step by emulsion polymerization, suspension polymerization, or the like while adding a dispersion stabilizer to the polymerization system during polymerization. It is preferable to use a one-step synthesis method that produces a liquid medium dispersion in which the polymer particles that satisfy the requirements [1] and [2] (i.e., have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%) are dispersed in a liquid medium from the viewpoint of an improvement in productivity. Such a dispersion may be produced by controlling the particle size distribution of the polymer particles using the above synthesis method.

Note that the liquid medium dispersion that includes the polymer particles synthesized in one step need not necessarily be used. The polymer particles (A) may be synthesized in two steps by separately producing a small-diameter polymer particle component and a large-diameter polymer particle component using the above polymerization method, and mixing the small-diameter polymer particle component and the large-diameter polymer particle component.

The polymer particles (A) that satisfy the requirements [1] and [2] may be obtained by mixing 2 to 60 parts by mass (based on polymer particles) of a liquid medium dispersion (I) of polymer particles having a modal particle size of 0.01 or more and less than 0.25 micrometers and 40 to 98 parts by mass (based on polymer particles) of a liquid medium dispersion (II) of polymer particles having a modal particle size of 0.25 to 0.5 micrometers. Note that the total amount of the polymer particles after mixing the liquid medium dispersion (I) and the liquid medium dispersion (II) is 100 parts by mass. The term "modal particle size" used herein refers to the median value of a modal interval calculated from the particle size distribution of the liquid medium dispersion determined using a particle size analyzer that utilizes the light scattering method as the measurement principle.

If the amount of the liquid medium dispersion (I) of polymer particles having a modal particle size of 0.01 or more and less than 0.25 micrometers is more than 60 parts by mass (based on polymer particles) (i.e., the amount of the liquid medium dispersion (II) of polymer particles having a modal particle size of 0.25 to 0.5 micrometers is less than 40 parts by mass (based on polymer particles)), relatively small polymer particles may move (migrate) toward the interface with air due to surface tension along with evaporation of the liquid medium when applying the electrode slurry to the collector, and drying the applied electrode slurry. As a result, the polymer particles may be unevenly distributed in the surface of the electrode, and transfer of electrons with an electrolyte solution may be hindered. Moreover, adhesion between the active material layer and the collector may decrease, and the binding/bonding capability may deteriorate since the amount of the polymer particles is relatively small at the interface between the active material layer and the collector. Specifically, the electrical characteristics and adhesion between the active material layer and the collector may be impaired when the polymer particles are included in the electrode slurry in a poorly-balanced manner.

Examples of a polymerizable unsaturated monomer that produces the polymer particles (A) include ethylenically unsaturated carboxylates such as ethyl acrylate, butyl acrylate, 2-ethylhexyl acrylate, 2-hydroxyethyl acrylate, ethoxyethyl acrylate, methyl methacrylate, 2-ethylhexyl methacrylate, n-decyl methacrylate, 2-hydroxyethyl methacrylate, isoamyl crotonate, n-hexyl crotonate, dimethylaminoethyl methacrylate, and monomethyl maleate; conjugated diene compounds such as 1,3-butadiene, 1,3-pentadiene, 2,3-pentadiene, isoprene, 1,3-hexadiene, 2,3-dimethyl-1,3-butadiene, 2-ethyl-1,3-butadiene, and 1,3-heptadiene; ethylenically unsaturated carboxylic acids such as acrylic acid, methacrylic acid, crotonic acid, itaconic acid, maleic acid, and maleic anhydride; aromatic vinyl compounds such as styrene, alpha-methylstyrene, 2,4-dimethylstyrene, ethylstyrene, and vinylnaphthalene; cyano group-containing vinyl compounds such as acrylonitrile and methacrylonitrile; vinyl ester compounds such as vinyl acetate and vinyl propionate; vinyl ether compounds such as ethyl vinyl ether, cetyl vinyl ether, and hydroxybutyl vinyl ether; and the like. These polymerizable unsaturated monomers may be used either alone or in combination.

It is preferable to provide the polymer particles with a crosslinked structure by polymerizing the above monomer together with a small amount of crosslinkable monomer since the polymer particles are then not easily dissolved in a dispersion solvent or an electrolyte solution. Examples of the crosslinkable monomer include divinyl compounds such as divinylbenzene; polyfunctional dimethacrylates such as diethylene glycol dimethacrylate and ethylene glycol dimethacrylate; polyfunctional trimethacrylates such as trimethylolpropane trimethacrylate; polyfunctional diacylates such as polyethylene glycol diacylate and 1,3-butylene glycol diacylate; polyfunctional triacylates such as trimethylolpropane triacylate; and the like. The crosslinkable monomer is normally used in a ratio of 1 to 20 mass%, and preferably 0.5 to 15 mass%, based on the total amount of the polymerizable monomers.

The pH of the liquid medium dispersion of polymer particles obtained by emulsion polymerization, suspension polymerization, or the like may be adjusted by adding an aqueous solution of ammonia, an alkali metal (e.g., lithium, sodium, potassium, rubidium, or cesium) hydroxide, an inorganic ammonium compound (e.g., ammonium chloride), an organic amine compound (e.g., ethanolamine or diethylamine), or the like. It is preferable to adjust the pH of the liquid medium dispersion to 5 to 13 and preferably 6 to 12 using ammonia or an alkali metal hydroxide since adhesion between the collector and the active material layer can be improved.

The polymer particles included in the liquid medium dispersion of polymer particles obtained by emulsion polymerization, suspension polymerization, or the like may be used directly as the polymer particles (A) used for the electrode slurry according to one embodiment of the invention. Note that the configuration is not limited thereto. For example, when the dispersion medium used for polymerization is a non-aqueous liquid medium, the non-aqueous liquid medium may be replaced with water, and the polymer particles may be used in a state in which the polymer particles are dispersed in water. When the polymer particles are powder particles, the powder particles may be dispersed in a dispersion medium to prepare the electrode slurry according to one embodiment of the invention.

When producing a cathode using the electrode slurry according to one embodiment of the invention, it is preferable that the electrode slurry include the polymer particles (A) in an amount of 0.3 to 10 parts by mass, and more preferably 0.5 to 5 parts by mass, based on 100 parts by mass of the active material particles (B). When producing an anode using the electrode slurry according to one embodiment of the invention, the electrode slurry normally includes the polymer particles (A) in an amount of 0.2 to 5 parts by mass, and preferably 0.5 to 2.5 parts by mass, based on 100 parts by mass of the active material particles (B). Since the electrode slurry according to one embodiment of the invention exhibits a sufficient binding/bonding capability even when the amount of the polymer particles is reduced to a value that is about half to about 1/10th of that of a known electrode slurry, an electrical storage device produced using the electrical storage device electrode according to one embodiment of the invention has high capacity and exhibits a high charge rate.

2.3. Active material particles (B)

A material for forming the active material particles (B) included in the electrode slurry according to one embodiment of the invention is not particularly limited. An optimum material may be appropriately selected depending on the type of the target electrical storage device. For example, when producing a lithium-ion secondary battery, an anode active material and a cathode active material used to produce the electrodes of a normal lithium-ion secondary battery may be used as the material for forming the active material particles (B).

Examples of the anode active material include carbonaceous materials such as amorphous carbon, graphite, natural graphite, mesocarbon microbeads (MCMB), and pitch-based carbon fibers; conductive polymers such as polyacene; complex metal oxides represented by $A_X B_Y O_Z$ (wherein A is an alkali metal or a transition metal, B is at least one metal selected from transition metals such as cobalt, nickel, aluminum, tin, and manganese, O is an oxygen atom, and X, Y, and Z are numbers that satisfy $1.10 > X > 0.05$, $4.00 > Y > 0.85$, and $5.00 > Z > 1.5$); Si-containing alloys; Si-containing complex compounds; other metal oxides; and the like.

In particular, when silicon (Si) is used as the anode active material, silicon can occlude up to twenty-two lithium atoms per five silicon atoms ($5Si + 22Li \rightarrow Li_{22}Si_5$). As a result, the theoretical capacity of silicon reaches 4200 mAh/g.

However, silicon shows a large change in volume when occluding lithium. Specifically, while a graphite-based anode active material expands by a factor of up to about 1.2 as a result of occluding lithium, a silicon-based active material expands by a factor of up to about 4.4 as a result of occluding lithium. Therefore, a silicon-based active material produces a fine powder, and causes separation from the collector and separation of the active material as a result of repeated expansion and contraction, and the conductive network in the active material layer is broken. Accordingly, the cycle characteristics significantly deteriorate within a short time.

However, when a silicon-based active material is used for forming the active material particles (B) included in the electrode slurry according to one embodiment of the invention, an electrical storage device electrode that does not show the above problem and exhibits excellent electrical characteristics can be produced. This is considered to be because the polymer particles (A) can strongly bind the silicon-based active material, and the polymer particles (A) expand and contract even when the silicon-based active material expands as a result of occluding lithium to maintain a state in which the silicon-based active material is strongly bound. It is also considered that a deterioration in the silicon-based active material when forming the active material layer can be suppressed since the polymer particles (A) aggregate around the silicon-based active material in an aqueous dispersion, and suppress hydrolysis of the silicon-based active material. Note that the term "silicon-based active material" used herein refers to an active material that includes silicon (Si) as the main component. The silicon-based active material may be an active material that has a silicon content of 90 mass% or more.

When using a carbon-based active material and a silicon-based active material for forming the active material particles (B), the silicon-based active material is preferably used in an amount of 4 to 40 parts by mass, more preferably 5 to 35 parts by mass, and particularly preferably 5 to 30 parts by mass, based on the total mass (=100 parts by mass) of the active material particles (B), from the viewpoint of maintaining a sufficient binding/bonding capability When the amount of the silicon-based active material is within the above range based on the total mass of the active material particles (B), since the volume expansion of the carbon-based active material due to charge/discharge is smaller than that of the silicon-based active material, expansion and contraction of the active material layer that includes the carbon-based active material and the silicon-based active material can be suppressed, and adhesion between the active material layer and the collector can be further improved.

The silicon material disclosed in JP-A-2004-185810, or an Si oxide composite represented by $SiO_x$ (X=0 to 2) that is produced by the disproportionation reaction of silicon monoxide (e.g., the materials disclosed in JP-A-2004-47404 and JP-A-2005-259697) may be used as the silicon-based active material. The above carbonaceous material may preferably be used as the carbon-based active material that is used in combination with the silicon-based active material. It is more preferable to use graphite as the carbon-based active material.

The cathode active material is not particularly limited as long as the cathode active material can occlude and release lithium ions. Examples of the cathode active material include sulfides such as $TiS_2$, $TiS_3$, $MoS_3$, and $LiFeS_2$, transition metal oxides such as $Cu_2V_2O_3$, $V_2O\text{-}P_2O_5$, $MoO_2$, $V_2O_5$, $V_6O_{13}$, $LiCoO_2$, $LiNiO_2$, $LiMnO_2$, $LiMn_2O_4$, $LiNi_{0.4}Mn_{1.6}O_4$, $LiCo_{0.3}Ni_{0.7}O_2$, $V_2O_5$, and $MnO_2$, oxides having an olivine structure such as $LiCoPO_4$, $LiFePO_4$, $LiCoPO_4F$, and $LiFePO_4F$, lithium titanium oxides having a spinel structure such as $Li_4Ti_5O_{12}$, $Li_4Fe_{0.5}Ti_5O_{12}$, and $Li_4+Zn_{0.5}Ti_5O_{12}$, mixtures thereof, and the like. An organic compound such as a conductive polymer (e.g., polyacetylene or poly(p-phenylene)) may also be used.

When producing a nickel-hydrogen secondary battery, an arbitrary active material that is used for a normal nickel-hydrogen secondary battery may be used. A hydrogen storage alloy may be used as the anode active material, and nickel oxyhydroxide, nickel hydroxide, or the like may be used as the cathode active material.

The average particle size (Db) of the active material particles (B) is selected so that the ratio (Db/Da) is within the above range. The average particle size (Db) of the active material particles (B) is normally 1 to 200 micrometers, preferably 10 to 100 micrometers, and more preferably 20 to 50 micrometers.

Note that the average particle size (Db) of the active material particles (B) refers to a particle size (D50) at 50% (vol%) in a cumulative particle size distribution measured using a laser diffraction particle size distribution analyzer that utilizes the laser diffraction method as the measurement principle. Examples of the laser diffraction particle size distribution analyzer include HORIBA LA-300 series, HORIBA LA-920 series (manufactured by Horiba, Ltd.), and the like. The particle size distribution analyzer can measure not only the particle size distribution of the primary particles of the active material particles, but also the particle size distribution of the secondary particles that are formed through aggregation of the primary particles. Therefore, the average particle size (Db) measured by the particle size distribution analyzer can be used as an index of the dispersion state of the active material particles (B) included in the electrode slurry.

Note that the average particle size (Db) of the active material particles (B) may also be measured by centrifuging the electrode slurry to precipitate the active material particles (B), and analyzing the supernatant liquid using the above method.

2.4. Water (C)

The electrode slurry according to one embodiment of the invention includes the water (C). The electrode slurry exhibits excellent stability due to the water (C), so that the electrode can be produced with good reproducibility Since a high drying speed can be achieved as compared with a high-boiling-point solvent (e.g., N-methylpyrrolidone) that is normally used for an electrode slurry, an improvement in productivity and suppression of migration are expected to be achieved due to a reduction in drying time.

2.5. Additive

The electrode slurry according to one embodiment of the invention may optionally include a conductivity-imparting agent, a non-aqueous medium, a thickener, and the like in addition to the components (A) to (C).

Specific examples of the conductivity-imparting agent used for a lithium-ion secondary battery include carbon materials such as graphite and activated carbon. When producing a lithium-ion secondary battery, cobalt oxide may be used as the conductivity-imparting agent for the cathode, and a nickel powder, cobalt oxide, titanium oxide, carbon, or the like may be used as the conductivity-imparting agent for the anode. Examples of the carbon material include ketjen black, acetylene black, furnace black, graphite, carbon fibers, fullerenes, and the like. Among these, ketjen black, acetylene black, and furnace black are preferable. The conductivity-imparting agent is normally used in an amount of 1 to 20 parts by mass, and preferably 2 to 10 parts by mass, based on 100 parts by mass of the active material particles (B).

The electrode slurry according to one embodiment of the invention may include a non-aqueous medium having a normal boiling point of 80 to 350°C so that the applicability of the electrode slurry is improved. Specific examples of the non-aqueous medium include amides such as N-methylpyrrolidone, dimethylformamide, and dimethylacetamide; hydrocarbons such as toluene, xylene, n-dodecane, and tetralin; alcohols such as 2-ethyl-1-hexanol, 1-nonanol, and lauryl alcohol; ketones such as methyl ethyl ketone, cyclohexanone, phorone, acetophenone, and isophorone; esters such as benzyl acetate, isopentyl butyrate, methyl lactate, ethyl lactate, and butyl lactate; amines such as o-toluidine, m-toluidine, and p-toluidine; lactones such as gamma-butyrolactone and delta-butyrolactone; sulfoxides/sulfones such as dimethyl sulfoxide and sulfolane; and the like. These non-aqueous media may be used either alone or in combination (i.e., mixed solvent). It is preferable to use N-methylpyrrolidone as the non-aqueous medium from the viewpoint of the stability of the polymer particles and workability when applying the electrode slurry.

The electrode slurry according to one embodiment of the invention may include a thickener so that the applicability of the electrode slurry is improved. Specific examples of the thickener include celluloses such as carboxymethyl cellulose, methyl cellulose, and hydroxypropyl cellulose; ammonium salts or alkali metal salts of the celluloses; polycarboxylic acids such as poly(meth)acrylic acid and modified poly(meth)acrylic acid; alkali metal salts of these polycarboxylic acids; polyvinyl alcohol-based (co)polymers such as polyvinyl alcohol, modified polyvinyl alcohol, and an ethylene-vinyl alcohol copolymer; water-soluble polymers such as a saponified product of a copolymer of a vinyl ester and an unsaturated carboxylic acid (e.g., (meth)acrylic acid, maleic acid, or fumaric acid); and the like. It is particularly preferable to use an alkali metal salt of carboxymethyl cellulose, an alkali metal salt of poly(meth)acrylic acid, or the like as the thickener.

When the electrode slurry according to one embodiment of the invention includes the thickener, the content of the thickener in the electrode slurry is normally 5 to 200 mass%, preferably 10 to 150 mass%, and more preferably 20 to 100 mass%, based on the total mass of the polymer particles (total solid content).

2.6. Method for preparing electrode slurry

The electrode slurry according to one embodiment of the invention may be prepared by mixing the polymer particles (A), the active material particles (B), the water (C), and an optional additive. The components may be mixed (stirred) using a known technique (e.g., a technique using a stirrer, a deaerator, a bead mill, a high-pressure homogenizer, or the like). It is preferable to prepare the electrode slurry under reduced pressure. This makes it possible to prevent formation of bubbles in the resulting electrode layer.

When mixing (stirring) the components to prepare the electrode slurry according to one embodiment of the invention, it is necessary to select a mixer that can stir the components so that aggregates of the active material particles do not remain in the resulting slurry while selecting necessary and sufficient dispersion conditions. The degree of dispersion may be measured using a grind gage. The components must be mixed and dispersed so that the resulting slurry does not include aggregates having a size of more than 100 micrometers. Examples of the mixer include a ball mill, a sand mill, a pigment disperser, a grinder, an ultrasonic disperser, a homogenizer, a planetary mixer, a Hobart mixer, and the like.

3. Electrode binder composition

An electrode binder composition (hereinafter may be referred to as "binder composition") according to one embodiment of the invention is used to produce the electrode slurry. More specifically, the electrode binder composition according to one embodiment of the invention is a dispersion in which the polymer particles that function as a binder for bonding the active material and the like to the collector are dispersed in a liquid medium.

The electrode binder composition according to one embodiment of the invention includes (A) polymer particles and a liquid medium, and is characterized in that the polymer particles (A) have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%. Each component included in the electrode binder composition according to one embodiment of the invention is described in detail below.

3.1. Polymer particles (A)

The polymer particles (A) included in the electrode binder composition according to one embodiment of the invention satisfy at least the following requirements [1] and [2].

[1] Polymer particles having a particle size of 0.01 or more and less than 0.25 micrometers account for 2 to 60 vol% (preferably 3 to 55 vol%, and more preferably 4 to 50 vol%).
[2] Polymer particles having a particle size of 0.25 to 0.5 micrometers account for 40 to 98 vol% (preferably 45 to 97 vol%, and more preferably 50 to 96 vol%).

If the content of polymer particles having a particle size of 0.01 or more and less than 0.25 micrometers exceeds the range recited as the requirement [1], the binder may be unevenly (locally) distributed at the interface between the active material layer and air, and penetration of an electrolyte solution into the active material layer may be hindered, so that the electrical characteristics (e.g., charge-discharge characteristics) may deteriorate, and adhesion between the collector and the active material layer may decrease (i.e., separation or the like may occur). If the content of polymer particles having a particle size of 0.01 or more and less than 0.25 micrometers is less than the range recited as the requirement [1], fall-off resistance may deteriorate.

If the content of polymer particles having a particle size of 0.25 to 0.5 micrometers exceeds the range recited as the requirement [2], fall-off resistance may deteriorate. If the content of polymer particles having a particle size of 0.25 to 0.5 micrometers is less than the range recited as the requirement [2], the binder may be unevenly (locally) distributed at the interface between the active material layer and air, and penetration of an electrolyte solution into the active material layer may be hindered, so that the electrical characteristics may deteriorate, and adhesion between the collector and the active material layer may decrease (i.e., separation or the like may occur).

The particle size distribution of the polymer particles (A) is determined by analyzing the binder composition (sample) using a particle size distribution analyzer that utilizes the light scattering method as the measurement principle. Examples of the particle size distribution analyzer include Coulter LS230, Coulter LS 100, Coulter LS 13 320 (all manufactured by Coulter), FPAR-1000 (Otsuka Electronics Co., Ltd.), and the like. The particle size distribution analyzer can measure not only the particle size distribution of the primary particles of the polymer particles (A), but also the particle size distribution of the secondary particles that are formed through aggregation of the primary particles. Therefore, the particle size distribution measured by the particle size distribution analyzer can be used as an index of the dispersion state of the polymer particles (A) included in the binder composition.

A polymer for forming the polymer particles (A) included in the binder composition according to one embodiment of the invention is not particularly limited. Examples of the polymer for forming the polymer particles (A) included in the binder composition according to one embodiment of the invention include a (meth)acrylate (co)polymer, a styrene-(meth) acrylate copolymer, a styrene-butadiene copolymer, an acrylonitrile-butadiene copolymer, polybutadiene, and the like.

It is preferable that the polymer be a rubbery polymer that preferably has a glass transition temperature (Tg) of -75 to +30°C, and particularly preferably -70 to +10°C. If a polymer that has too low a Tg is used, a decrease in battery capacity may occur. If a polymer that has too high a Tg is used, the binding/bonding capability may deteriorate, or a temperature-dependent change in battery characteristics may increase.

## 3.2. Liquid medium

Water and a non-aqueous medium having a normal boiling point of 80 to 350°C are preferable as the liquid medium (dispersion medium) included in the binder composition according to one embodiment of the invention. Examples of the non-aqueous medium include amides such as N-methylpyrrolidone, dimethylformamide, and dimethylacetamide; hydrocarbons such as toluene, xylene, n-dodecane, and tetralin; alcohols such as 2-ethyl-1-hexanol, 1-nonanol, and lauryl alcohol; ketones such as  methyl ethyl ketone, cyclohexanone, phorone, acetophenone, and isophorone; esters such as benzyl acetate, isopentyl butyrate, methyl lactate, ethyl lactate, and butyl lactate; amines such as o-toluidine, m-toluidine, and p-toluidine; lactones such as gamma-butyrolactone and delta-butyrolactone; sulfoxides/sulfones such as dimethyl sulfoxide and sulfolane; and the like. These non-aqueous media may be used either alone or in combination (i.e., mixed solvent). It is preferable to use water or N-methylpyrrolidone from the viewpoint of the stability of the binder composition and workability when applying the binder composition.

## 3.3. Additive

The binder composition according to one embodiment of the invention may include a thickener so that the applicability of the binder composition is improved. Specific examples of the thickener include celluloses such as carboxymethyl cellulose, methyl cellulose, and hydroxypropyl cellulose; ammonium salts or alkali metal salts of the celluloses; polycarboxylic acids such as poly(meth)acrylic acid and modified poly(meth)acrylic acid; alkali metal salts of these polycarboxylic acids; polyvinyl alcohol-based (co)polymers such as polyvinyl alcohol, modified polyvinyl alcohol, and an ethylene-vinyl alcohol copolymer; water-soluble polymers such as a saponified product of a copolymer of a vinyl ester and an unsaturated carboxylic acid (e.g., (meth)acrylic acid, maleic acid, or fumaric acid); and the like. It is particularly preferable to use an alkali metal salt of carboxymethyl cellulose, an alkali metal salt of poly(meth)acrylic acid, or the like as the thickener.

When the binder composition according to one embodiment of the invention includes the thickener, the thickener is normally used in an amount of 5 to 200 parts by mass, preferably 10 to 150 parts by mass, and more preferably 20 to 100 parts by mass, based on 100 parts by mass of the polymer particles (total solid content).

3.4. Production method

The binder composition according to one embodiment of the invention may be produced using a liquid medium dispersion that includes (A) polymer particles and a liquid medium, the polymer particles (A) having a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%. Such a liquid medium dispersion may be produced by controlling the particle size distribution of the polymer particles using a known synthesis method.

The binder composition according to one embodiment of the invention may also be produced by mixing two or more liquid medium dispersions that differ in particle size distribution instead of using a liquid medium dispersion that includes polymer particles for which the particle size distribution has been controlled when synthesizing the polymer particles. For example, the binder composition according to one embodiment of the invention may be produced by mixing 2 to 60 parts by mass (based on polymer particles) of a liquid medium dispersion (I) of polymer particles having a modal particle size of 0.01 or more and less than 0.25 micrometers and 40 to 98 parts by mass (based on polymer particles) of a liquid medium dispersion (II) of polymer particles having a modal particle size of 0.25 to 0.5 micrometers. Note that the total amount of the polymer particles after mixing the liquid medium dispersion (I) and the liquid medium dispersion (II) is 100 parts by mass. The term "modal particle size" used herein refers to the median value of a modal interval calculated from the particle size distribution of the liquid medium dispersion determined using a particle size analyzer that utilizes the light scattering method as the measurement principle.

If the amount of the liquid medium dispersion (I) of polymer particles having a modal particle size of 0.01 or more and less than 0.25 micrometers is more than 60 parts by mass (based on polymer particles) (i.e., the amount of the liquid medium dispersion (II) of polymer particles having a modal particle size of 0.25 to 0.5 micrometers is less than 40 parts by mass (based on polymer particles)), relatively small polymer particles may move (migrate) toward the interface with air due to surface tension along with evaporation of the liquid medium when applying a slurry prepared by mixing the binder composition and the active material to the collector, and drying the applied electrode slurry. As a result, the polymer particles may be unevenly distributed in the surface of the electrode, and transfer of electrons with an electrolyte solution may be hindered. Moreover, adhesion between the active material layer and the collector may decrease, and the binding/bonding capability may deteriorate since the amount of the polymer particles is relatively small at the interface between the active material layer and the collector. Specifically, the electrical characteristics and adhesion between the active material layer and the collector may be impaired when the polymer particles (A) are included in the binder composition in a poorly-balanced manner.

The polymer particles may be produced by an arbitrary method. For example, the polymer particles may be produced by emulsion polymerization, seed emulsion polymerization, suspension polymerization, seed suspension polymerization, solution precipitation polymerization, or the like. It is also possible to use a dissolution dispersion method that dissolves or swells polymer particles in a solvent, stirs the mixture in a medium that is immiscible with the solvent, and then removes the solvent. The resulting polymer particles may be chemically modified, or may be physically modified by applying electron beams, for example.

The binder composition according to one embodiment of the invention may be obtained in two steps by separately producing a small-diameter polymer particle component and a large-diameter polymer particle component using the above polymerization method, and mixing the small-diameter polymer particle component and the large-diameter polymer particle component. Note that the binder composition according to one embodiment of the invention may be obtained in one step using emulsion polymerization, suspension polymerization, or the like while adding a dispersion stabilizer to the polymerization system during polymerization.

A polymerizable unsaturated monomer used to produce the polymer particles is not particularly limited as long as the polymerizable unsaturated monomer can produce polymer particles that satisfy the above particle size distribution requirements. Specific examples of such a polymerizable unsaturated monomer include ethylenically unsaturated carboxylates such as ethyl acrylate, butyl acrylate, 2-ethylhexyl acrylate, 2-hydroxyethyl acrylate, ethoxyethyl acrylate, methyl methacrylate, 2-ethylhexyl methacrylate, n-decyl methacrylate, 2-hydroxyethyl methacrylate, isoamyl crotonate, n-hexyl crotonate, dimethylaminoethyl methacrylate, and monomethyl maleate; conjugated diene compounds such as 1,3-butadiene, 1,3-pentadiene, 2,3-pentadiene, isoprene, 1,3-hexadiene, 2,3-dimethyl-1,3-butadiene, 2-ethyl-1,3-butadiene, and 1,3-heptadiene; ethylenically unsaturated carboxylic acids such as acrylic acid, methacrylic acid, crotonic acid, itaconic acid, maleic acid, and maleic anhydride; aromatic vinyl compounds such as styrene, alpha-methylstyrene, 2,4-dimethylstyrene, ethylstyrene, and vinylnaphthalene; cyano group-containing vinyl compounds such as acrylonitrile and methacrylonitrile; vinyl ester compounds such as vinyl acetate and vinyl propionate; vinyl ether compounds such as ethyl vinyl ether, cetyl vinyl ether, and hydroxybutyl vinyl ether; and the like. These polymerizable unsaturated monomers may be used either alone or in combination.

It is preferable to provide the polymer that functions as a binder with a crosslinked structure by polymerizing the above monomer together with a small amount of crosslinkable monomer since the polymer is then not easily dissolved in a dispersion solvent or an electrolyte solution. Examples of the crosslinkable monomer include divinyl compounds such as divinylbenzene; polyfunctional dimethacrylates such as diethylene glycol dimethacrylate and ethylene glycol dimethacrylate; polyfunctional trimethacrylates such as trimethylolpropane trimethacrylate; polyfunctional diacylates such as polyethylene glycol diacylate and 1,3-butylene glycol diacylate; polyfunctional triacylates such as trimethylolpropane triacylate; and the like. The crosslinkable monomer is normally used in a ratio of 1 to 20 mass%, and preferably 0.5 to 15 mass%, based on the total amount of the polymerizable monomers.

The pH of the liquid medium dispersion of polymer particles obtained by emulsion polymerization, suspension polymerization, or the like may be adjusted by adding an aqueous solution of ammonia, an alkali metal (e.g., lithium, sodium, potassium, rubidium, or cesium) hydroxide, an inorganic ammonium compound (e.g., ammonium chloride), an organic amine compound (e.g., ethanolamine or diethylamine), or the like. It is preferable to adjust the pH of the liquid medium dispersion to 5 to 13 and preferably 6 to 12 using ammonia or an alkali metal hydroxide since adhesion between the collector and the active material layer can be improved.

The liquid medium dispersion of polymer particles obtained by emulsion polymerization, suspension polymerization, or the like may be used directly as the binder composition according to one embodiment of the invention. Note that the configuration is not limited thereto. For example, when the dispersion medium is water, water may be replaced with a non-aqueous liquid medium to prepare a composition in which the polymer particles are dispersed in the non-aqueous liquid medium. When the polymer particles are powder particles, the powder particles may be dispersed in a dispersion medium to prepare the binder composition according to one embodiment of the invention. When replacing the dispersion medium, a non-aqueous liquid medium is added to an aqueous dispersion, and water included in the dispersion medium is removed by distillation, ultrafiltration, or the like. An excellent initial battery capacity is obtained by removing water so that the residual water content is 5 mass% or less (preferably 0.5 mass% or less). The total content of the polymer particles (i.e., solid content) in the binder composition according to one embodiment of the invention is normally 0.5 to 80 mass%, preferably 1 to 70 mass%, and more preferably 1 to 60 mass%.

4. Electrical storage device

An electrical storage device according to one embodiment of the invention includes the above electrical storage device electrode. The electrical storage device further includes an electrolyte solution, and is produced by a normal method using various parts (e.g., separator). For example, the electrical storage device is produced by placing an anode and a cathode one on top of another via a separator to form a laminate, rolling or folding the laminate in the shape of a battery, placing the laminate in a battery casing, injecting an electrolyte solution into the battery casing, and sealing the battery casing. The battery may have an arbitrary shape (e.g., coin, button, sheet, cylinder, square, or flat shape).

The electrolyte solution may be in the form of a liquid or gel. The electrolyte solution may be selected from known electrolyte solutions used for a normal electrical storage device depending on the type of the anode active material and the type of the cathode active material so that the function of the battery is achieved.

An arbitrary lithium salt may be used as the electrolyte used for a lithium-ion secondary battery. Examples of the lithium salt include $LiClO_4$, $LiBF_4$, $LiPF_6$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $LiCF_3SO_3$, $LiCH_3SO_3$, $LiC_4F_9SO_3$, $Li(CF_3SO_2)_2N$, lithium lower aliphatic carboxylates, and the like. When producing a nickel-hydrogen secondary battery, a potassium hydroxide aqueous solution (concentration: 5 mol/l or more) may be used as the electrolyte solution, for example.

The solvent used to dissolve the electrolyte is not particularly limited. Specific examples of the solvent include carbonates such as propylene carbonate, ethylene carbonate, butylene carbonate, dimethyl carbonate, methylethyl carbonate, and diethyl carbonate; lactones such as gamma-butyrolactone; ethers such as trimethoxymethane, 1,2-dimethoxyethane, diethyl ether, 2-ethoxyethane, tetrahydrofuran, and 2-methyltetrahydrofuran; and sulfoxides such as dimethyl sulfoxide. These compounds may be used either alone or in combination (as a mixed solvent).

5. Examples

The invention is further described below by way of examples. Note that the invention is not limited to the following examples. In the examples and comparative examples, the unit "parts" refers to "parts by mass", and the unit "%" refers to "mass%" unless otherwise specified.

5.1. Synthesis and preparation of polymer particle dispersion

5.1.1. Synthesis of polymer particle dispersion A

A reactor was charged with 100 parts of water, 100 parts of monomers (42 parts of butadiene, 30 parts of styrene, 8 parts of acrylonitrile, 18 parts of methyl methacrylate, and 2 parts of itaconic acid), 1 part of t-dodecylmercaptan (chain transfer agent), 1.5 parts of a sodium alkyl diphenyl ether disulfonate (surfactant), 0.4 parts of potassium persulfate (initiator), and 0.3 parts of sodium carbonate. The monomers were polymerized at 70°C for 8 hours with stirring. The reaction was terminated when the polymerization conversion rate reached 96%. The reactor was then charged with 10 parts of water, 14 parts of butadiene (monomer), 15 parts of styrene (monomer), 6 parts of methyl methacrylate (monomer), 0.1 parts of a sodium alkyl diphenyl ether disulfonate (surfactant), 0.2 parts of potassium persulfate (initiator), and 0.1 parts of sodium carbonate. After polymerizing the monomers at 80°C for 8 hours, the reaction was terminated. The polymerization conversion rate was 98%. After removing unreacted monomers from the resulting polymer particle dispersion, the polymer particle dispersion was concentrated. The solid content and the pH of the polymer particle dispersion were adjusted by adding a 10% sodium hydroxide aqueous solution and water to obtain a polymer particle dispersion A having a solid content of 41 % and a pH of 7.2.

5.1.2. Synthesis of polymer particle dispersions B to F

When using emulsion polymerization, the particle size of polymer particles can be decreased by increasing the amount of surfactant, and can be increased by decreasing the amount of surfactant. Polymer particle dispersions B to F were prepared in the same manner as in the section "5.1.1. Synthesis of polymer particle dispersion A", except that the amount of the surfactant was appropriately increased or decreased to utilize the above phenomenon.

5.1.3. Measurement of modal particle size of polymer particle dispersion

The particle size distribution of the polymer particle dispersions A to F was measured using a particle size distribution analyzer ("FPAR-1000" manufactured by Otsuka Electronics Co., Ltd.) that utilizes the dynamic light scattering method as the measurement principle, and the modal particle size was determined from the particle size distribution. The data was calculated based on volume. The results are shown below. A polymer particle dispersion having a modal particle size of 0.01 or more and less than 0.25 micrometers was classified as "liquid medium dispersion (I)", and a polymer particle dispersion having a modal particle size of 0.25 to 0.5 micrometers was classified as "liquid medium dispersion (II)" (see Table 1).

Liquid medium dispersion (I)

    Polymer particle dispersion A: modal particle size: 0.15 micrometers
    Polymer particle dispersion E: modal particle size: 0.20 micrometers
    Polymer particle dispersion F: modal particle size: 0.08 micrometers

Liquid medium dispersion (II)

    Polymer particle dispersion B: modal particle size: 0.37 micrometers
    Polymer particle dispersion C: modal particle size: 0.40 micrometers
    Polymer particle dispersion D: modal particle size: 0.26 micrometers

5.1.4. Preparation of electrode binder compositions P1 to P9

The polymer particle dispersion A and the polymer particle dispersion B were mixed in a solid content mass ratio of 10:90 to obtain an electrode binder composition P1. The particle size distribution of the electrode binder composition P1 was measured using a particle size distribution analyzer ("FPAR-1000" manufactured by Otsuka Electronics Co., Ltd.) that utilizes the dynamic light scattering method as the measurement principle. The average particle sizes (Da) of the electrode binder composition P1 was 0.35 micrometers. It was found that the electrode binder composition P1 contained 11 vol% of polymer particles having a particle size of 0.01 or more and less than 0.25 micrometers, and 89 vol% of polymer particles having a particle size of 0.25 to 0.5 micrometers. The data was calculated based on volume.

Electrode binder compositions P2 to P9 were prepared in the same manner as the electrode binder composition P1, except that the composition was changed as shown in Table 1, and the particle size distribution of the electrode binder compositions P2 to P9 was measured. The measurement results are shown in Table 1.

TABLE 1

| Type of electrode binder composition | | P1 | P2 | P3 | P4 | P5 | P6 | P7 | P8 | P9 |
|---|---|---|---|---|---|---|---|---|---|---|
| Liquid medium dispersion (I) | Polymer particle dispersion | A | A | A | F | E | F | A | - | A |
| | Modal particle size (micrometers) | 0.15 | 0.15 | 0.15 | 0.08 | 0.20 | 0.08 | 0.15 | - | 0.15 |
| | Amount (parts by mass) | 10 | 45 | 4 | 30 | 45 | 10 | 100 | - | 70 |
| Liquid medium dispersion (II) | Polymer particle dispersion | B | B | B | C | C | D | - | C | B |
| | Modal particle size (micrometers) | 0.37 | 0.37 | 0.37 | 0.40 | 0.40 | 0.26 | - | 0.40 | 0.37 |
| | Amount (parts by mass) | 90 | 55 | 96 | 70 | 55 | 90 | - | 100 | 30 |
| Polymer particles having particle size of 0.01 or more and less than 0.25 micrometers | vol% | 11 | 40 | 7 | 30 | 14 | 5 | 98 | 1 | 65 |
| Polymer particles having particle size of 0.25 to 0.5 micrometers | vol% | 89 | 57 | 93 | 65 | 85 | 90 | 2 | 99 | 30 |
| Average particle size (Da) | micrometers | 0.35 | 0.27 | 0.36 | 0.30 | 0.31 | 0.24 | 0.15 | 0.40 | 0.22 |

5.2. Preparation of electrode slurry

A twin-screw planetary mixer ("TK HIVIS MIX 2P-03" manufactured by PRIMIX Corporation) was charged with 1 part (based on solid content) of a thickener ("CMC2200" manufactured by Daicel Corporation), 100 parts (based on solid content) of graphite (anode active material), and 68 parts of water. The mixture was stirred at 60 rpm for 1 hour. After the addition of 1 part (based on solid content) of the electrode binder composition P1, the mixture was stirred for 1 hour to obtain a paste. After the addition of water to the paste to adjust the solid content to 50%, the mixture was stirred at 200 rpm for 2 minutes, stirred at 1800 rpm for 5 minutes, and stirred at 1800 rpm for 1.5 minutes under vacuum, using a stirrer/deaerator ("THINKY Mixer (*Awatori Rentarou*)" manufactured by THINKY Corporation) to prepare an electrode slurry S1.

The average particle size (Da) of the polymer particles (A) (see Table 2) was determined by centrifuging the electrode slurry, and measuring the particle size distribution of the supernatant liquid using a particle size distribution analyzer ("FPAR-1000" manufactured by Otsuka Electronics Co., Ltd.) that utilizes the dynamic light scattering method as the measurement principle.

The graphites (active material particles (B)) shown in Table 2 that differed in average particle size (Db) were obtained by grinding commercially available graphite ("MAGD" manufactured by Hitachi Chemical Co., Ltd.) using an agate mortar while changing the grinding time. The average particle size (Db) of the graphite (active material particles (B)) (see Table 2) was determined by centrifuging the electrode slurry to precipitate the graphite, removing the supernatant liquid, and measuring the particle size distribution of the precipitate using a laser diffraction particle size distribution analyzer ("HORIBA LA-300 series" manufactured by Horiba Ltd.).

The graphite-silicon active material mixed particles used as the active material particles (B) (see Table 3) were prepared in accordance with JP-A-2004-185810.

Specifically, a silicon powder (average particle size: 10 micrometers) (99.6%) obtained by grinding a silicon ingot using an agate mortar and commercially available graphite ("MAGD" manufactured by Hitachi Chemical Co., Ltd.) were mixed in the mass ratio shown in Table 3, and the mixture was ground for 3 hours in a nitrogen atmosphere using an agitated media mill. After cooling the mixture to room temperature, the mixture was removed from the agitated media mill, and subjected to air without forming an oxidation resistant coating to obtain graphite-silicon active material mixed particles. The mixture was ground while appropriately changing the grinding time to obtain the graphite-silicon active material mixed particles shown in Table 3 that differed in average particle size (Db). The average particle size (Db) of the graphite-silicon active material mixed particles (active material particles (B)) (see Table 3) was determined by centrifuging the electrode slurry to precipitate the graphite-silicon active material mixed particles, removing the supernatant liquid, and measuring the particle size distribution of the precipitate using a laser diffraction particle size distribution analyzer ("HORIBA LA-300 series" manufactured by Horiba Ltd.).

The thread-forming capability of the electrode slurry was measured as described below.

A Zahn cup ("Zahn Viscosity Cup No. 5" manufactured by Taiyu Kizai Co., Ltd.) having an orifice (diameter: 5.2 mm) at the bottom thereof was provided. 40 g of the electrode slurry was poured into the Zahn cup in a state in which the orifice was closed. The orifice was then opened, and the electrode slurry was allowed to flow out through the orifice. The time To when the orifice had been opened, and the time $T_A$ when the electrode slurry no longer flowed out through the orifice as if to form a thread were measured. The time $T_B$ when the electrode slurry no longer flowed out from the orifice was also measured. The thread-forming capability of the electrode slurry was calculated by the following expression (3) using the measured times To, $T_A$, and $T_B$.

$$\text{Thread-forming capability (\%)} = ((T_A - T_0) / (T_B - T_0)) \times 100 \qquad (3)$$

Electrode slurries S2 to S19 were prepared in the same manner as the electrode slurry S1, except that the composition was changed as shown in Table 2 or 3. The properties of the resulting electrode slurries are shown in Table 2.

5.3. Production of electrical storage device electrode and lithium-ion secondary battery

5.3.1. Production of electrical storage device electrode (anode)

The electrode slurry S 1 was uniformly applied to the surface of a collector formed of a copper foil using a doctor blade method so that the thickness after drying was 80 micrometers. The electrode slurry was then dried at 120°C for 20 minutes. The resulting film was pressed using a roll press (gap control-type roll press "SA-601" manufactured by Tester Sangyo Co,. Ltd.) so that the film had a density of 1.30 g/cm$^3$ to obtain an electrical storage device electrode (anode) of Example 1.

Electrical storage device anodes of Examples 2 to 12 and Comparative Examples 1 to 7 were obtained in the same manner as the electrical storage device anode of Example 1, except that each electrode slurry shown in Table 2 or 3 was used, and the compression conditions of the roll press were changed so that the active material layer had the density shown in Table 2 or 3. The polymer distribution coefficient and the density of the active material layer of the resulting electrical storage device anode are shown in Table 2.

The polymer distribution coefficient of the active material layer of the electrical storage device anode was calculated as described below. Specifically, the electrical storage device anode was divided into two parts. A double-sided tape ("NW-25" manufactured by Nichiban Co., Ltd.) (120 mm) was attached to an aluminum plate (70×150 mm) provided in advance, and a Kapton tape ("650S" manufactured by Teraoka Corporation) was attached to the double-sided tape so that the adhesive face was positioned on the upper side to obtain a securing stage. The active material layer of a sample (20×100 mm) prepared by cutting the electrical storage device electrode was placed on the securing stage adhesive, and compression-bonded using a roller.

The securing stage on which the sample was secured was placed on a horizontal surface, and the sample was pulled upward at a constant speed so that the sample formed an angle of 90° with the securing stage to remove the collector from the adhesive face. The active material layer that remained on the collector and the active material layer that remained on the Kapton tape were scraped off up to a depth of 1.5 micrometers from the surface of the active material layer to obtain a measurement sample A. The entire active material layer was scraped off from the other of the electrical storage device anodes to obtain a measurement sample B. The measurement sample A and the measurement sample B were analyzed by pyrolysis gas chromatography using a high-frequency induction heating-type pyrolyzer to calculate the content (mass%) (per unit weight) of the polymer component in each sample. The resulting values were substituted into the following expression (1) to calculate the polymer distribution coefficient.

$$\text{Polymer distribution coefficient} = (\text{polymer content (mass\%) in measurement sample A})$$

$$/ (\text{polymer content (mass\%) in measurement sample B}) \qquad (1)$$

The mass A (g) of the collector, the mass B (g) of the electrical storage device anode, the area C ($cm^2$) and the thickness D (micrometers) of the active material layer formed on the collector were measured, and the density ($g/cm^3$) of the active material layer was calculated by the following expression (2).

$$\text{Density (g/cm}^3) \text{ of active material layer} =$$

$$(B \, (g) - A \, (g)) / (C \, (cm^2) \times D \, (micrometers) \times 10^{-4}) \qquad (2)$$

5.3.2. Production of counter electrode (electrical storage device cathode)

A twin-screw planetary mixer ("TK HIVIS MIX 2P-03" manufactured by PRIMIX Corporation) was charged with 4.0 parts (based on the solid content) of an electrode binder ("KF Polymer #1120" manufactured by Kureha Corporation), 3.0 parts of a conductive aid ("DENKA BLACK" 50% pressed product, manufactured by Denki Kagaku Kohyo Kabushiki Kaisha), 100 parts (based on the solid content) of $LiCoO_2$ (particle size: 5 micrometers) (manufactured by Hayashi Kasei Co., Ltd.) (cathode active material), and 36 parts of N-methylpyrrolidone (NMP). The mixture was stirred at 60 rpm for 2 hours to prepare a paste. After the addition of NMP to the paste to adjust the solid content to 65%, the mixture was stirred at 200 rpm for 2 minutes, stirred at 1800 rpm for 5 minutes, and then stirred at 1800 rpm for 1.5 minutes under vacuum using a stirrer/deaerator ("THINKY Mixer (*Awatori Rentarou)"* manufactured by THINKY Corporation) to prepare an electrode slurry. The electrode slurry was uniformly applied to the surface of a collector formed of an aluminum foil using a doctor blade method so that the thickness after drying was 80 micrometers. The resulting film was dried at 120°C for 20 minutes. The resulting film was pressed using a roll press (gap control-type roll press "SA-601" manufactured by Tester Sangyo Co,. Ltd.) so that the film had a density of 3.0 $g/cm^3$ to obtain a counter electrode (electrical storage device cathode).

5.3.3. Assembly of lithium-ion secondary battery

In a glovebox in which the internal atmosphere was replaced with argon (Ar) so that the dew point was -80°C, an anode (diameter: 15.95 mm) obtained by cutting the electrical storage device anode produced as described above was placed on a two-electrode coin cell ("HS Flat Cell" manufactured by Hohsen Corp.). A separator ("Celgard #2400" manufactured by Celgard, LLC.) (diameter: 24 mm) obtained by cutting a polypropylene porous membrane was placed on the anode, and 500 microliters of an electrolyte solution was injected into the two-electrode coin cell while avoiding entrance of air. A cathode (diameter: 16.16 mm) obtained by cutting the counter electrode (electrical storage device cathode) produced as described above was placed on the separator, and the outer casing of the two-electrode coin cell was air-tightly secured using a screw to produce a lithium-ion secondary battery. Note that the electrolyte solution was prepared by dissolving $LiPF_6$ in ethylene carbonate/ethylmethyl carbonate (=1/1) at a concentration of 1 mol/l.

5.4. Evaluation method

(1) Evaluation of applicability (flatness)

A sample (width: 12 cm, length: 12 cm) was prepared by cutting the electrical storage device anode produced as described above, and the thickness of thirty-six 2×2 cm squares was measured using a film thickness meter ("DIGIMATIC MICROMETER IP65" manufactured by Mitutoyo Corporation). The ratio (flatness) of the standard deviation to the average thickness was calculated.
When the standard deviation of the active material layer exceeds 2%, it is considered that the electrode slurry is not uniformly applied. In this case, when an electrode is produced by applying the electrode slurry over a large area, the active material layer formed on the surface of the collector exhibits poor flatness. Therefore, uniform electrical characteristics are not obtained over the entire surface of the electrode. In particular, stable electrical characteristics cannot be obtained when mass-producing the electrodes. In contrast, when the standard deviation of the active material layer is 2% or less, it is considered that the electrode slurry is uniformly applied. In this case, when an electrode is produced by applying the electrode slurry over a large area, the active material layer formed on the surface of the collector exhibits excellent flatness. Therefore, uniform electrical characteristics are obtained over the entire surface of the electrode. In particular, stable electrical characteristics can be obtained when mass-producing the electrodes. The applicability of the electrode slurry was evaluated in accordance with the following standard taking account of the above consideration. The results are shown in Table 2.

Acceptable: The standard deviation was 2% or less (i.e., the flatness was good).
Unacceptable: The standard deviation exceeded 2% (i.e., the flatness was poor).

(2) Evaluation of fall-off resistance

Five samples (10×5 cm) were prepared by cutting the electrical storage device anode produced as described above, and stacked one on top of another. A commercially available high-quality paper was placed on a laboratory table, and a 100-mesh stainless steel screen was placed thereon. The stacked samples were cut nine times over the screen using scissors from the long side at intervals of 1 cm, and the state of the active material powder that had passed through the screen and fallen onto the high-quality paper was observed. The fall-off resistance was evaluated as follows based on the observation results. The results are shown in Table 2. Acceptable: The active material powder did not fall onto the high-quality paper, or only a small amount of the active material powder fell onto the high-quality paper. Unacceptable: A large amount of the active material powder fell onto the high-quality paper.

(3) Evaluation of binding/bonding capability

Five samples (10×10 cm) were prepared by cutting the electrical storage device anode produced as described above, and compressed at 120°C for 5 minutes using a hot press. The active material layer of the electrical storage device anode was cut at intervals of 2 mm in a matrix using a knife to reach the collector to form twenty-five squares. A pressure-sensitive adhesive tape was attached to the cut surface of the active material layer, and immediately removed. The number of squares in which the active material layer was removed from the copper foil was counted. The above test was performed once for each sample (one side). The total number of removed squares (among the 125 squares of the five samples) was counted, and the binding/bonding capability was evaluated as follows based on the number of removed squares. The results are shown in Table 2.

Acceptable: The number of removed squares was 0 to 20 (i.e., the binding/bonding capability was good).
Unacceptable: The number of removed squares was 21 or more (i.e., the binding/bonding capability was poor).

(4) Evaluation of charge-discharge rate characteristics

The lithium-ion secondary battery produced as described above was charged at a constant current (0.2C), charged at a constant voltage (4.2 V) when the voltage reached 4.2 V, and determined to be fully charged (cut-off when the current value reached 0.01C. The charge capacity at 0.2C was measured. The lithium-ion secondary battery was then discharged at a constant current (0.2C), and determined to be fully discharged (cut-off) when the voltage reached 2.7 V. The discharge capacity at 0.2C was measured. The ratio (%) of the discharge capacity at 3C to the discharge capacity at 0.2C was calculated, and taken as the discharge rate characteristics (%).

The lithium-ion secondary battery was then charged at a constant current (3C), charged at a constant voltage (4.2 V) when the voltage reached 4.2 V, and determined to be fully charged (cut-off) when the current value reached 0.01C. The charge capacity at 3C was measured. The lithium-ion secondary battery was then discharged at a constant current (3C), and determined to be fully discharged (cut-off) when the voltage reached 2.7 V. The discharge capacity at 3C was measured. The ratio (%) of the charge capacity at 3C to the charge capacity at 0.2C was calculated, and taken as the charge rate characteristics (%).

Acceptable: The discharge rate characteristics and the charge rate characteristics were 80% or more.
Unacceptable: The discharge rate characteristics or the charge rate characteristics were less than 80%.

TABLE 2

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Type of electrode slurry | | S1 | S2 | S3 | S4 | S5 | S6 | S7 | S8 | S9 | S10 |
| Component (A) | Electrode binder composition | P1 | P2 | P3 | P4 | P5 | P6 | P7 | P8 | P9 | P2 |
| | Average particle size Da (micrometers) | 0.35 | 0.27 | 0.36 | 0.30 | 0.31 | 0.24 | 0.15 | 0.40 | 0.22 | 0.27 |
| | Amount (based on solid content) (parts by mass) | 1 | 1 | 1 | 1 | 1 | I | 1 | 1 | 1 | 2 |
| Component (B) | Average particle size Db (micrometers) | 22 | 22 | 10 | 10 | 10 | 22 | 10 | 5 | 22 | 22 |
| | Amount (parts by mass) | 100 | 100 | 100 | 100 | 100 | 100 | 100 | 100 | 100 | 100 |
| Component (C) | | Water | Water | Water | Water | Water | Water | Water | Water | Water | Water |
| Properties of slurry | Db/Da | 63 | 81 | 28 | 33 | 32 | 91 | 67 | 13 | 102 | 81 |
| | Thread-forming capability (%) | 70 | 50 | 78 | 35 | 65 | 60 | 20 | 70 | 70 | 90 |

EP 2 677 568 A1

(continued)

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Properties of electrode | Polymer distribution coefficient | 0.70 | 0.75 | 0.80 | 0.84 | 0.80 | 0.96 | 0.52 | 0.83 | 0.96 | 0.41 |
| | Density (g/cm$^3$) of active material layer | 1.30 | 1.50 | 1.80 | 1.50 | 1.80 | 1.50 | 1.50 | 1.25 | 1.90 | 1.80 |
| Evaluation results | Applicability (flatness) | Acceptable | Acceptable | Acceptable | Acceptable | Acceptable | Acceptable | Unacceptable | Acceptable | Acceptable | Unacceptable |
| | Fall-off resistance | Acceptable | Acceptable | Acceptable | Acceptable | Acceptable | Acceptable | Acceptable | Unacceptable | Acceptable | Acceptable |
| | Binding/ bonding capability | Acceptable | Acceptable | Acceptable | Acceptable | Acceptable | Acceptable | Unacceptable | Acceptable | Unacceptable | Unacceptable |
| | Charge-discharge rate characteristic | Acceptable | Acceptable | Acceptable | Acceptable | Acceptable | Acceptable | Unacceptable | Acceptable | Unacceptable | Unacceptable |

TABLE 3

| | | Example 7 | Example 8 | Example 9 | Example 10 | Example 11 | Example 12 | Comparative Example 6 | Comparative Example 7 |
|---|---|---|---|---|---|---|---|---|---|
| Type of electrode slurry | | S12 | S13 | S14 | S15 | S16 | S17 | S18 | S19 |
| Component (A) | Electrode binder composition | P1 | P2 | P3 | P4 | P5 | P6 | P7 | P8 |
| | Average particle size Da (micrometers) | 0.35 | 0.27 | 0.36 | 0.30 | 0.31 | 0.24 | 0.15 | 0.40 |
| | Amount (based on solid content) (parts by mass) | 1 | 1 | 1 | 1 | 1 | 1 | 1 | 1 |
| Component (B) | Average particle size Db (micrometers) | 22 | 22 | 10 | 10 | 10 | 22 | 10 | 5 |
| | Amount of graphite (parts by mass) | 95 | 95 | 90 | 80 | 95 | 70 | 97 | 50 |
| | Amount of silicon (parts by mass) | 5 | 5 | 10 | 20 | 5 | 30 | 3 | 50 |
| Component (C) | | Water | Water | Water | Water | Water | Water | Water | Water |
| Properties of slurry | Db/Da | 63 | 81 | 28 | 33 | 32 | 91 | 67 | 13 |
| | Thread-forming capability (%) | 69 | 51 | 78 | 38 | 64 | 68 | 21 | 71 |
| Properties of electrode | Polymer distribution coefficient | 0.73 | 0.78 | 0.83 | 0.89 | 0.84 | 0.98 | 0.53 | 0.85 |
| | Density (g/cm$^3$) of active material layer | 1.60 | 1.60 | 1.79 | 1.70 | 1.80 | 1.75 | 1.6 | 1.9 |

(continued)

| Evaluation results | | Example 7 | Example 8 | Example 9 | Example 10 | Example 11 | Example 12 | Comparative Example 6 | Comparative Example 7 |
|---|---|---|---|---|---|---|---|---|---|
| | Applicability (flatness) | Acceptable | Acceptable | Acceptable | Acceptable | Acceptable | Acceptable | Unacceptable | Acceptable |
| | Fall-off resistance | Acceptable | Acceptable | Acceptable | Acceptable | Acceptable | Acceptable | Acceptable | Unacceptable |
| | Binding/ bonding capability | Acceptable | Acceptable | Acceptable | Acceptable | Acceptable | Acceptable | Unacceptable | Unacceptable |
| | Charge-discharge rate characteristic | Acceptable | Acceptable | Acceptable | Acceptable | Acceptable | Acceptable | Unacceptable | Acceptable |

5.5. Evaluation results

As shown in Table 2, the electrical storage device anodes of Examples 1 to 12 exhibited excellent fall-off resistance, and adhesion between the collector and the active material layer was high. The lithium-ion secondary batteries respectively including the electrical storage device anodes of Examples 1 to 12 exhibited excellent charge-discharge rate characteristics (i.e., electrical characteristics).

In contrast, since the active material layer of the electrical storage device anodes of Comparative Examples 1, 4, 5, and 6 had a polymer distribution coefficient of less than 0.6, the surface of the active material layer had poor flatness. Since the active material layer of the electrical storage device anodes of Comparative Examples 1, 4, 5, and 6 had a polymer distribution coefficient of less than 0.6, adhesion between the collector and the active material layer was poor. The lithium-ion secondary batteries respectively including the electrical storage device anodes of Comparative Examples 1, 4, 5, and 6 exhibited poor charge-discharge characteristics.

Since the active material layer of the electrical storage device anode of Comparative Example 2 had a polymer distribution coefficient within the range of 0.6 to 1.0, but had a density of less than 1.3 g/cm$^3$, the fall-off resistance was poor.

Since the active material layer of the electrical storage device anode of Comparative Examples 3 and 7 had a polymer distribution coefficient within the range of 0.6 to 1.0, but had a density of more than 1.8 g/cm$^3$, adhesion between the collector and the active material layer was poor.

The invention is not limited to the above embodiments. Various modifications and variations may be made of the above embodiments. For example, the invention includes various other configurations substantially the same as the configurations described in connection with the above embodiments (e.g., a configuration having the same function, method, and results, or a configuration having the same objective and results). The invention also includes a configuration in which an unsubstantial part (element) described in connection with the above embodiments is replaced with another part (element). The invention also includes a configuration having the same effects as those of the configurations described in connection with the above embodiments, or a configuration capable of achieving the same objective as that of the configurations described in connection with the above embodiments. The invention further includes a configuration in which a known technique is added to the configurations described in connection with the above embodiments.

REFERENCE SIGNS LIST

10: collector, 20: active material layer, 100: electrical storage device electrode

**Claims**

1. An electrical storage device electrode comprising a collector, and an active material layer that is formed on a surface of the collector,
   the active material layer including at least a polymer and an active material, and
   the active material layer having a polymer distribution coefficient of 0.6 to 1.0 and a density of 1.3 to 1.8 g/cm$^3$.

2. The electrical storage device electrode according to claim 1, wherein the active material includes a silicon-based active material.

3. The electrical storage device electrode according to claim 1 or 2, wherein the active material layer is a layer that is formed by applying an electrode slurry to the surface of the collector, and drying the applied electrode slurry, the electrode slurry including (A) polymer particles, (B) active material particles, and (C) water, a ratio (Db/Da) of an average particle size (Db) of the active material particles (B) to an average particle size (Da) of the polymer particles (A) being 20 to 100, and the electrode slurry having a thread-forming capability of 30 to 80%.

4. The electrical storage device electrode according to claim 3, wherein the polymer particles (A) have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

5. The electrical storage device electrode according to claim 3 or 4, wherein the average particle size (Db) of the active material particles (B) is 1 to 200 micrometers.

6. An electrode slurry for producing the electrical storage device electrode according to claim 1 or 2, the electrode slurry comprising (A) polymer particles, (B) active material particles, and (C) water, a ratio (Db/Da) of an average particle size (Db) of the active material particles (B) to an average particle size (Da) of the polymer particles (A) being 20 to 100, and the electrode slurry having a thread-forming capability of 30 to 80%.

7. The electrode slurry according to claim 6, wherein the polymer particles (A) have a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

8. The electrode slurry according to claim 6 or 7, wherein the average particle size (Db) of the active material particles (B) is 1 to 200 micrometers.

9. An electrode binder composition for producing the electrode slurry according to claim 6, the electrode binder composition comprising (A) polymer particles and a liquid medium, the polymer particles (A) having a particle size distribution in which polymer particles having a particle size of 0.01 or more and less than 0.25 micrometers account for 2 to 60 vol%, and polymer particles having a particle size of 0.25 to 0.5 micrometers account for 40 to 98 vol%.

10. The electrode binder composition according to claim 9, wherein the liquid medium has a normal boiling point of 80 to 350°C.

11. An electrical storage device comprising the electrical storage device electrode according to any one of claims 1 to 5.

FIG.1

**INTERNATIONAL SEARCH REPORT**

| International application No. |
| --- |
| PCT/JP2012/052680 |

A. CLASSIFICATION OF SUBJECT MATTER
*H01M4/13*(2010.01)i, *H01G9/058*(2006.01)i, *H01M4/139*(2010.01)i, *H01M4/62* (2006.01)i

According to International Patent Classification (IPC) or to both national classification and IPC

B. FIELDS SEARCHED

Minimum documentation searched (classification system followed by classification symbols)
H01M4/13, H01G9/058, H01M4/139, H01M4/62

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2008-311217 A (Hitachi Chemical Co., Ltd.),<br>25 December 2008 (25.12.2008),<br>claims 1 to 12; paragraphs [0044], [0051];<br>examples<br>(Family: none) | 1,2,10,11<br>1,10,11<br>3-9 |
| Y<br>A | JP 5-226004 A (Asahi Chemical Industry Co.,<br>Ltd.),<br>03 September 1993 (03.09.1993),<br>claims 1 to 8; paragraphs [0020] to [0027];<br>examples 8, 9, 11<br>& WO 1993/006628 A1 & EP 603397 A1<br>& US 5631100 A & CA 2106066 A<br>& KR 10-1997-0004141 B & KR 10-1997-0004141 B | 1,10,11<br>2-9 |

| ☒ Further documents are listed in the continuation of Box C. | ☐ See patent family annex. |

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>23 April, 2012 (23.04.12) | Date of mailing of the international search report<br>01 May, 2012 (01.05.12) |

| Name and mailing address of the ISA/<br>Japanese Patent Office | Authorized officer |
| Facsimile No. | Telephone No. |

Form PCT/ISA/210 (second sheet) (July 2009)

| | **INTERNATIONAL SEARCH REPORT** | International application No. |
|---|---|---|
| | | PCT/JP2012/052680 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-273682 A  (Nippon Zeon Co., Ltd.), 08 October 1999 (08.10.1999), claims 1 to 5; paragraph [0038]; examples (Family: none) | 1-11 |
| A | JP 2006-100222 A  (Sanyo Electric Co., Ltd.), 13 April 2006 (13.04.2006), claims 1 to 7; examples (Family: none) | 1-11 |
| A | JP 2006-172995 A  (Nissan Motor Co., Ltd.), 29 June 2006 (29.06.2006), claims 1 to 6; paragraph [0013]; examples (Family: none) | 1-11 |
| A | JP 11-297313 A  (Nippon Zeon Co., Ltd.), 29 October 1999 (29.10.1999), claims 1 to 3; paragraph [0008]; examples (Family: none) | 1-11 |
| A | JP 2003-100298 A  (Nippon Zeon Co., Ltd.), 04 April 2003 (04.04.2003), claims 1 to 7; examples (Family: none) | 1-11 |

Form PCT/ISA/210 (continuation of second sheet) (July 2009)

**EP 2 677 568 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003100298 A
- JP 11297313 A
- JP 2010205722 A
- JP 2010003703 A
- JP 10270013 A
- JP 2004185810 A
- JP 2004047404 A
- JP 2005259697 A